# EUROPEAN PATENT SPECIFICATION

(11) **EP 0 846 744 B1**
(45) Date of publication and mention of the grant of the patent: **19.09.2001**
(21) Application number: 97928482.5
(22) Date of filing: 26.06.1997
(51) Int. Cl.: C09J 11/04, C09J 121/00, C08K 5/098, C08K 3/24, C08L 21/00, C09J 201/00

(54) **ADHESION ACCELERATOR COMPOSITIONS AND ADHESIVE RUBBER COMPOSITION**
ADHÄSIONSBESCHLEUNIGER-ZUSAMMENSETZUNGEN UND KLEBSTOFFZUSAMMENSETZUNG AUS GUMMI
COMPOSITION ACCELERATRICE D'ADHERENCE ET COMPOSITION D'ADHESIF A BASE DE CAOUTCHOUC

(30) Priority: 26.06.1996 JP 18426096
(43) Date of publication of application: 10.06.1998
(73) Proprietor: Bridgestone Corporation, Tokyo 104-8340 (JP); JAPAN ENERGY CORPORATION, Tokyo 105-0001 (JP)
(72) Inventor: UCHINO, Osamu, Higashiyamato-shi, Tokyo 207 (JP); NAKANE, Shinsuke, Kodaira-shi, Tokyo 187 (JP); FUJIKI, Kanji, Kodaira-shi, Tokyo 187 (JP); IMORI, Toru, Japan Energy Corp. R & D Center, Toda-shi, Saitama 335 (JP); IIDA, Kazunori, Nikko CS Chemical Inc., Hitachi-shi, Ibaraki 317 (JP)
(74) Representative: Whalley, Kevin
(86) International application number: PCT/JP97/02217
(87) International publication number: WO 97/49776

(56) References cited:
- JP-A- 6 329 839
- JP-A- 6 329 840
- JP-A- 7 258 476

## Description

This invention relates to an adhesion promoter composition and an adherent rubber composition containing the same, and more particularly to an adhesion promoter composition suitable for promoting adhesion between a brass plated steel cord and a coating rubber for the steel cord and an adherent rubber composition containing the same.

In order to improve performances of automobile tires, conveyor belts and the like, steel cords are generally used as a reinforcing member.

Such steel cords are subjected to brass plating in order to increase an adhesive force to rubber to thereby enhance their reinforcing effect.

On the other hand, a cobalt salt of an organic acid is compounded as an adhesion promoter in a rubber composition in order to increase the adhesive force between rubber and steel cord.

However, cobalt has a problem in respect of safety and high cost. Also, in the case of using a cobalt salt of an organic acid, the adhesion property just after vulcanization is excellent, but the adhesion property durable to thermal aging is poor.

When another metal salt of an organic acid is compounded instead of the cobalt salt of the organic acid, however, the adhesive force just after vulcanization is poor, so that other metal salts of organic acids instead of cobalt have not yet been put into practical use.

It is, therefore, an object of the invention to provide an adhesion promoter composition being advantageous in respect of safety and economy and having a stably high adhesive force, and an adherent rubber composition containing the same.

The adhesion promoter composition according to the present invention is as follows.
(1) It is characterized by including a metal salt of an organic acid containing at least one metal selected from the group consisting of Zn, K, Al, Ti and Zr, and a hydrous inorganic salt.
(2) Among the components of the adhesion promoter composition according to the above item (1), an organic molybdenum compound is included instead of the hydrous inorganic salt.
(3) In addition to the components of the adhesion promoter composition according to the above item (1), an organic molybdenum compound is further included.
(4) In the adhesion promoter composition according to the above item (1) or (3), a molar ratio (H₂O/Me) of water (H₂O) in the hydrous inorganic salt to metal (Me) in the metal salt of the organic acid is 0.1-100.
(5) In the adhesion promoter composition according to the above item (2) or (3), a molar ratio (Mo/Me) of molybdenum (Mo) in the organic molybdenum compound to metal (Me) in the metal salt of the organic acid is 0.01-100.
(6) In the adhesion promoter composition according to the above item (3), a molar ratio (H₂O/Me) of water (H₂O) in the hydrous inorganic salt to metal (Me) in the metal salt of the organic acid is 0.1-100, and a molar ratio (Mo/Me) of molybdenum (Mo) in the organic molybdenum compound to metal (Me) in the metal salt of the organic acid is 0.01-100, and a molar ratio (H₂O/Mo) of water (H₂O) in the hydrous inorganic salt to molybdenum (Mo) in the organic molybdenum compound is 1-500.

Furthermore, the adherent rubber composition according to the invention is as follows.
(7) It is characterized by compounding a) at least one rubber ingredient selected from the group consisting of natural rubber and synthetic rubbers, b) an adhesion promoter composition described in any one of the above items (1)-(6), and c) sulfur.
(8) In the adherent rubber composition according to the above item (7), the adhesion promoter composition described in the above item (1) or (4) is compounded in an amount of 2.0 × 10⁻⁴ - 2.0 × 10⁻² mole calculated in terms of metal in the metal salt of the organic acid and in an amount of 2.5 × 10⁻³ - 2.5 X 10⁻¹ mole calculated in terms of water in the hydrous inorganic salt, and sulfur is compounded in an amount of 3-8 g, based on 100 g of the rubber ingredient.
(9) In the adherent rubber composition according to the above item (7), the adhesion promoter composition described in the above item (2) or (5) is compounded in an amount of 2.0 × 10⁻⁴ - 2.0 × 10⁻² mole calculated in terms of metal in the metal salt of the organic acid and in an amount of 2.0 × 10⁻⁶ - 2.0 × 10 mole calculated in terms of molybdenum in the molybdenum compound, and sulfur is compounded in an amount of 3-8 g, based on 100 g of the rubber ingredient.
(10) In the adherent rubber composition according to the above item (7), the adhesion promoter composition described in the above item (3) or (6) is compounded in an amount of 2.0 × 10⁻⁴ - 2.0 × 10⁻² mole calculated in terms of metal in the metal salt of the organic acid and in an amount of 2.5 × 10⁻³ - 2.5 × 10⁻¹ mole calculated in terms of water in the hydrous inorganic salt and in an amount of 2.0 × 10⁻⁶ - 2.0 × 10 mole calculated in terms of molybdenum in the molybdenum compound, and sulfur is compounded in an amount of 3-8 g, based on 100 g of the rubber ingredient.

The present invention will be described in detail below.

### [1] The adhesion promoter composition according to the present invention is as follows.

a) The organic acid constituting the metal salt of organic acid containing at least one metal selected from the group consisting of Zn, K, Al, Ti and Zr is not particularly restricted, and may be saturated or unsaturated, and be straight or branched chain. Also, it may be a bulky fatty acid having a naphthene ring, a benzene ring or the like. Mention may be made of neodecanoic acid, stearic acid, naphthenic acid, rosin, tall oil acid, oleic acid, linoleic acid, linolenic acid and the like. Further, a part of the organic acid may be substituted with a boron-containing compound, such as boric acid or the like when the metal is multivalent.
   Furthermore, the metal constituting the metal salt of organic acid according to the present invention is Zn, K, Al, Ti or Zr. They are advantageous in respect of safety, cost and the like.
   Moreover, the metal salts of the organic acid includes a case that a plurality of the same or different kinds of metals are bonded in one molecule, and may be used alone or in a combination thereof.
b) The organic molybdenum compound is not particularly limited, and an organic molybdenum sulfur compound having phosphorus or nitrogen such as molybdenum dithiophosphate (Mo-DTP), molybdenum dithiocarbamate or the like, a molybdenum salt of an organic acid and the like may be exemplified. As the organic acid, the above-mentioned ones may be exemplified.
   Furthermore, when the metal salt of the organic acid and the organic molybdenum compound are included as the components of the adhesion promoter composition, there may occur a state of bonding of at least one metal selected from the group consisting of Zn, K, Al, Ti and Zr, and molybdenum together in one molecule.
c) As the hydrous inorganic salt, mention may be made of NiSO₄·7H₂O, CoSO₄·7H₂O, NaSO₄·10H₂O, CaSO₄·2H₂O, CuSO₄·5H₂O, Al₂(SO₄)₃·18H₂O, FeSO₄·7H₂O, ZnSO₄·7H₂O, MgSO₄·7H₂O, Na₂S·9H₂O, Na₃PO₄·12H₂O, NaH₂PO₄·2H₂O, Na₂HPO₄·12H₂O, Ni₃(PO₄)₂·8H₂O, Mg₃(PO₄)₂·8H₂O, Li₃PO₄·5H₂O, Na₄P₂O₇·10H₂O, Ni₂P₂O₇·6H₂O, Mn₄(P₂O₇)₃·14H₂O, CoCO₃·6H₂O, NiCO₃·6H₂O, Na₂CO₃·10H₂O, Nd₂(CO₃)₃·8H₂O, Na₂SO₃·7H₂O, CaCl₂·6H₂O, NiCl₂·6H₂O, Na₂B₄O₇·10H₂O, FeCl₃·6H₂O, Na₂SiO₃·9H₂O and the like. By compounding such a hydrous inorganic salt, H₂O contained therein is released, whereby water content may be maintained even when a synthetic rubber having a low water content is compounded or in the winter season of dry air, and hence lowering of the adhesive force can be considered to be avoided. Also, it is effective to improve the adhesive force just after vulcanization i.e. an initial adhesive force.

It is preferable that when the metal salt of the organic acid and the hydrous inorganic salt are included as the ingredients of the adhesion promoter composition, the molar ratio (H₂O/Me) of water (H₂O) in the hydrous inorganic salt to metal (Me) in the metal salt of the organic acid is 0.1-100. When the molar ratio is less than 0.1, a sufficient effect may not be obtained, while when it exceeds 100, the water content may become too large and the adhesion property may be degraded.

From the same viewpoint as mentioned above, the molar ratio is more preferably 1-50 more particularly 5-20.

Furthermore, it is preferable that when the metal salt of the organic acid and the organic molybdenum compound are included as ingredients of the adhesion promoter composition, the molar ratio (Mo/Me) of molybdenum (Mo) in the organic molybdenum compound to metal (Me) in the metal salt of the organic acid is 0.01-100. When the molar ratio is less than 0.01, the effect of compounding the organic molybdenum compound may not be obtained, while when it exceeds 100, the cost is increased and is undesirable from an economical viewpoint though the effect is not changed.

From the same viewpoint as mentioned above, the molar ratio is more preferably 0.03-10, more particularly 0.05-1.0.

Moreover, it is preferable that when the hydrous inorganic salt and the organic molybdenum compound are included as ingredients of the adhesion promoter composition, the molar ratio (H₂O/Mo) of water (H₂O) in the hydrous inorganic salt to molybdenum (Mo) in the organic molybdenum compound is 1-500. When the molar ratio is outside this range, the synergistic effect may not be obtained.

From the same viewpoint as mentioned above, the molar ratio is more preferably 10-100, more particularly 25-75.

### [2] The adherent rubber composition according to the present invention is as follows.

As the rubber ingredient, at least one rubber is selected from natural rubber and synthetic rubbers. As the synthetic rubber, mention may be made of styrenebutadiene rubber (SBR), butadiene rubber, butyl rubber, halogenated butyl rubbers, preferably brominated butyl rubber, and butyl rubber having paramethylstyrene group copolymer of isobutylene and p-halogenated methylstyrene, or the like), ethylene-propylene-diene rubber (EPDM), isoprene rubber and the like.

Moreover, it is preferable that at least one of natural rubber and the synthetic isoprene rubber as the rubber ingredient is not less than 50% by weight from the viewpoint of adhesion property and fracture property of rubber.

Also, the adherent rubber composition is as stated above and the amount compounded with respect to the rubber ingredient is as follows.

That is, when the metal salt of the organic acid is included as a component of the adhesion promoter composition, it is preferably in an amount of 2.0 × 10⁻⁴ - 2.0 × 10⁻² mole calculated in terms of metal in the metal salt of the organic acid based on 100 g of the rubber ingredient. When said amount is less than 2.0 × 10⁻⁴ mole, a sufficient effect may not be obtained, while when it exceeds 2.0 × 10⁻² mole, the effect is not so changed and the cost becomes higher.

From the same viewpoint as mentioned above, said amount is more preferably 4.0 × 10⁻⁴ - 1.0 × 10⁻² mole, more particularly 1.0 × 10⁻³ - 4.0 × 10⁻³ mole.

Also, when the hydrous inorganic salt is included as a component of the adhesion promoter composition, it is preferably in an amount of 2.5 × 10⁻³ - 2.5 × 10⁻¹ mole calculated in terms of water in the hydrous inorganic salt based on 100 g of the rubber ingredient. When said amount is less than 2.5 × 10⁻³ mole, a sufficient effect may not be obtained, while when it exceeds 2.5 × 10⁻¹ mole, the effect is not so changed, and rather the water content becomes too large and the adhesion property may be lowered.

From the same viewpoint as mentioned above, said amount is more preferably 5.0 x 10⁻³ - 2.0 X 10⁻¹ mole, more particularly 7.5 × 10⁻³ - 7.5 × 10⁻² mole.

Furthermore, when the organic molybdenum compound is included as a component of the adhesion promoter composition, it is preferably in an amount of 2.0 × 10⁻⁶ - 2.0 × 10 mole calculated in terms of molybdenum in the organic molybdenum compound based on 100 g of the rubber ingredient. When said amount is less than 2.0 × 10⁻⁶ mole, a sufficient effect may not be obtained, while when it exceeds 2.0 × 10 mole, the effect is not so changed, and the cost becomes higher.

From the same viewpoint as mentioned above, said amount is more preferably 2.0 × 10⁻⁵ - 2.0 × 10⁻² mole, more particularly 1.0 × 10⁻⁴ - 1.0 × 10⁻³ mole.

Further, sulfur is preferably used in an amount of 3-8 g based on 100 g of the rubber ingredient. When said amount is less than 3 g, sulfur can not be provided in an amount enough to form CuₓS as a source of developing adhesive force and hence the adhesive force lowers, while when it exceeds 8 g, CuₓS is excessively formed and agglomeration fracture of enlarged CuₓS is created to lower the adhesive force and further the resistance to thermal aging of the rubber composition lowers.

Moreover, additives usually used in the rubber industry may properly be compounded in usual amounts in addition to the above components in the invention.

In particular, there may be included a filler such as carbon black, silica or the like; a softening agent such as aromatic oil or the like; a vulcanization accelerator, for example, guanidines such as diphenylguanidine or the like, thiazoles such as mercaptobenzothiazole or the like, sulfenamides such as N,N'-dicyclohexyl-2-benzothiazolylsulfenamide or the like, thiurams such as tetramethylthiuram disulfide or the like; an accelerator activator such as zinc oxide or the like; and an antioxidant, for example, poly(2,2,4-trimethyl-1,2-dihydroquinoline), amines such as phenyl-α-naphthylamine or the like.

Among them, a filler such as carbon black, silica or the like is known as a reinforcing agent for increasing tensile strength, strength at rupture, modulus of elasticity, hardness and the like of a vulcanized rubber, and improving wear resistance, resistance to stretching and the like thereof. Zinc oxide forms a complex compound with a fatty acid and is known as an accelerator activator enhancing the vulcanization acceleration.

Furthermore, it is preferable that the steel cord to be adhered with the adherent rubber composition according to the invention is subjected to plating with brass, zinc, or an alloy containing nickel or cobalt therewith for improving the adhesion to rubber, and more particularly to a brass plating treatment. A good and stable adhesion is obtained when the Cu content in brass plating for the steel cord is not more than 75% by weight, preferably 55-70% by weight. Moreover, the twisting structure of the cord is not limited particularly.

Further, the production of the adhesion promoter composition according to the invention and the adherent rubber composition containing the same is carried out according to a usual manner.

The invention will be further described with reference to the following Examples and Comparative Examples.

A rubber composition is prepared according to a compounding recipe described in each Table, and further a cord-reinforced rubber is prepared as mentioned later, and tests are conducted by the following methods to obtain results as shown in the same Tables.

Moreover, Table 1 shows a case of examining the effect when the adhesion promoter composition contains a metal salt of an organic acid and a hydrous inorganic salt, and Table 2 shows a case of examining the effect when the adhesion promoter composition contains a metal salt of an organic acid and an organic molybdenum compound, and each of Tables 3-6 shows a case of examining the effect when the adhesion promoter composition contains a metal salt of an organic acid, a hydrous inorganic salt and an organic molybdenum compound.

Since the adhesion property is dependent upon the season, weather and the like in a given day of kneading rubber, if the day of kneading rubber differs even for the same compounding recipe, the adhesion property may differ. In the Examples, the day of kneading rubber is the same in each Table.

Examples 28 and 29 described in Table 3 are a case of previously compounding a metal salt of an organic acid and an organic molybdenum compound, respectively.

### (1) Tensile test

After a sample is prepared by vulcanizing each of the rubber compositions under conditions of 160°C × 20 minutes, it is subjected to a tensile test according to JIS K 6301 to measure a tensile stress at 100% elongation (M₁₀₀) and an elongation at breakage (E_{B}).

### (2) Adhesion test

Steel cords (1x5 twisting structure, filament diameter: 0.25 mm) subjected to brass plating (Cu: 63% by weight, Zn: 37% by weight) are arranged side by side at an interval of 12.5 mm and coated from both sides with each of the rubber compositions and vulcanized under conditions of 160°C × 20 minutes to form a sample of 12.5 mm in thickness, from which a steel cord is pulled out under the following conditions according to ASTM-D-2229 to measure a pulling force. With respect to each of initial adhesion property and adhesion property in aging under the presence of oxygen, the measured value is represented by an index on the basis that each control is 100. The larger the index value, the better the property.

### Initial adhesion property

The measurement is carried out just after the above vulcanization.

### Adhesion property in aging under the presence of oxygen

After the vulcanization, each sample is aged in air at 120°C for 7 days for the measurement.

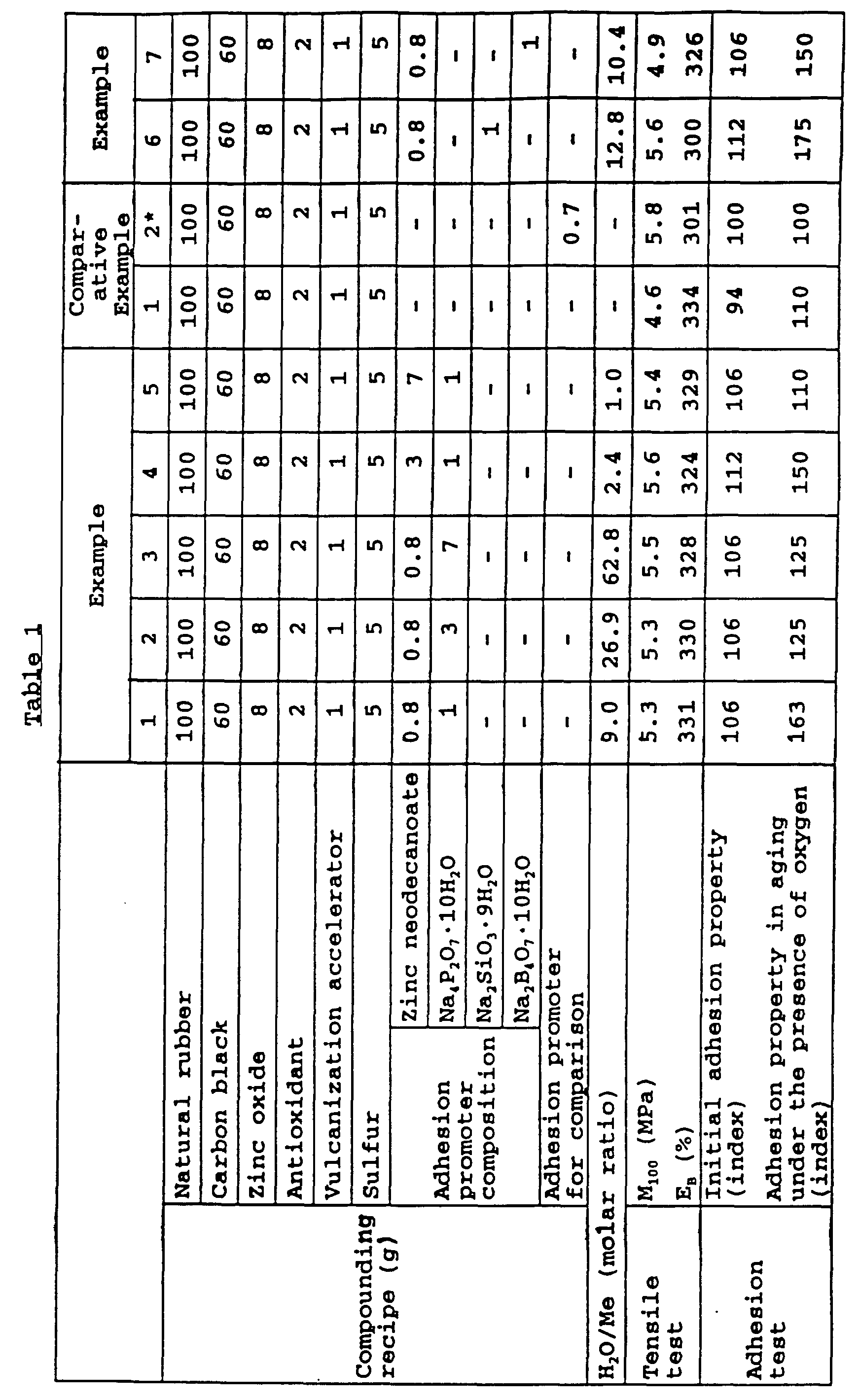

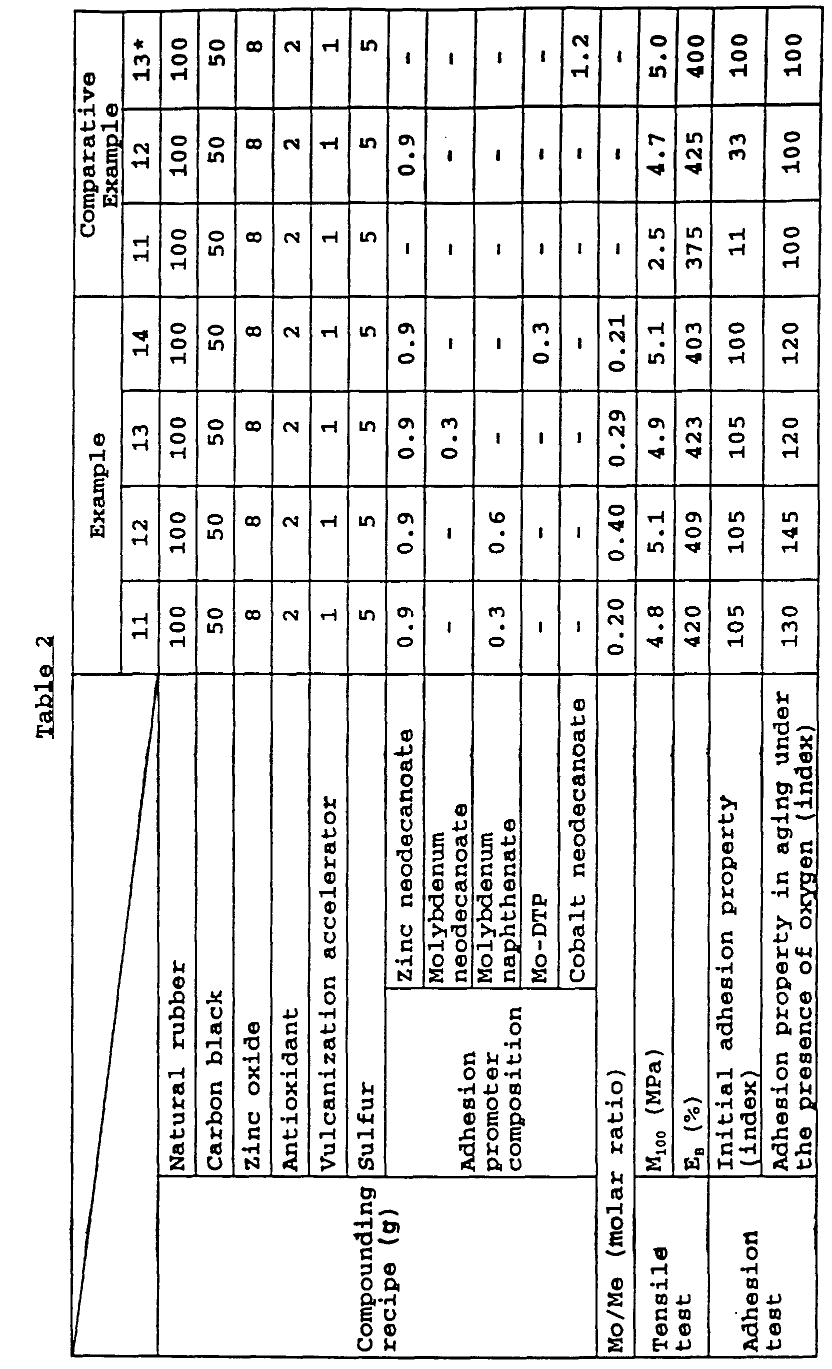

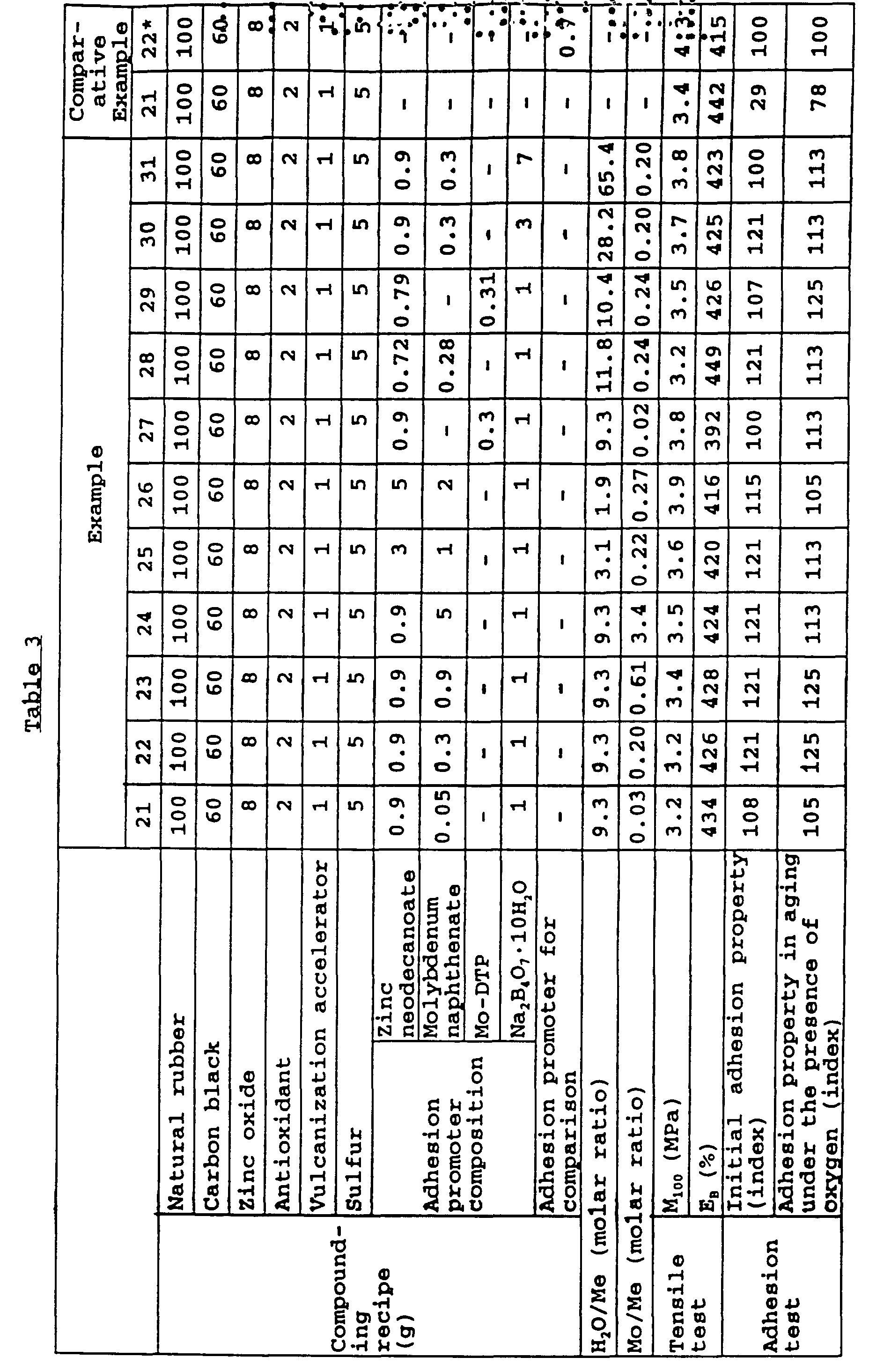

**Table 4**

| | | | Example | | | Comparative Example | |
|---|---|---|---|---|---|---|---|
| | | | 41 | 42 | 43 | 41 | 42* |
| Compounding recipe (g) | Natural rubber | | 100 | 100 | 100 | 100 | 100 |
| | Carbon black | | 60 | 60 | 60 | 60 | 60 |
| | Zinc oxide | | 8 | 8 | 8 | 8 | 8 |
| | Antioxidant | | 2 | 2 | 2 | 2 | 2 |
| | Vulcanization accelerator | | 1 | 1 | 1 | 1 | 1 |
| | Sulfur | | 5 | 5 | 5 | 5 | 5 |
| | Adhesion Adhesion promoter composition | Zinc neodecanoate | 0.9 | 0.9 | 3 | - | - |
| | | Molybdenum naphthenate | 0.3 | 3 | 0.3 | - | - |
| | | Na₄P₂O₇·10H₂O | 1 | 1 | 1 | - | - - |
| | Adhesion promoter for comparison | | - | - | - | - | 0.7 |
| H₂O/Me (molar ratio) | | | 7.9 | 7.9 | 2.6 | - | - |
| Mo/Me (molar ratio) | | | 0.20 | 2.05 | 0.07 | - | - |
| Tensile test | M₁₀₀ (MPa) | | 5.2 | 5.5 | 5.5 | 4.6 | 5.8 |
| | E_{B} (%) | | 316 | 325 | 331 | 334 | 301 |
| Adhesion test | Initial adhesion property (index) | | 129 | 121 | 114 | 86 | 100 |
| | Adhesion property in aging under the presence presence of oxygen (index) | | 162 | 155 | 143 | 60 | 100 |

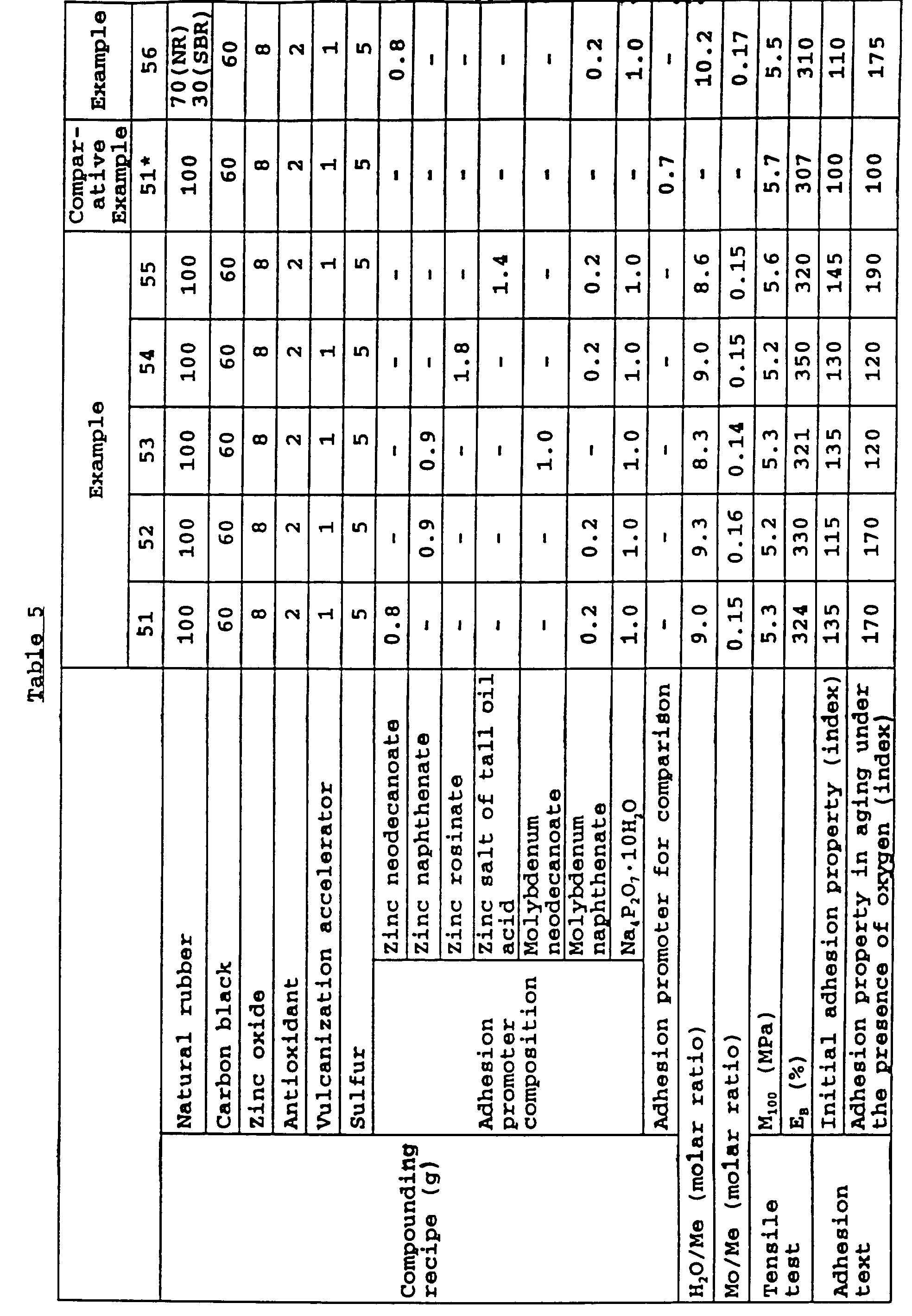

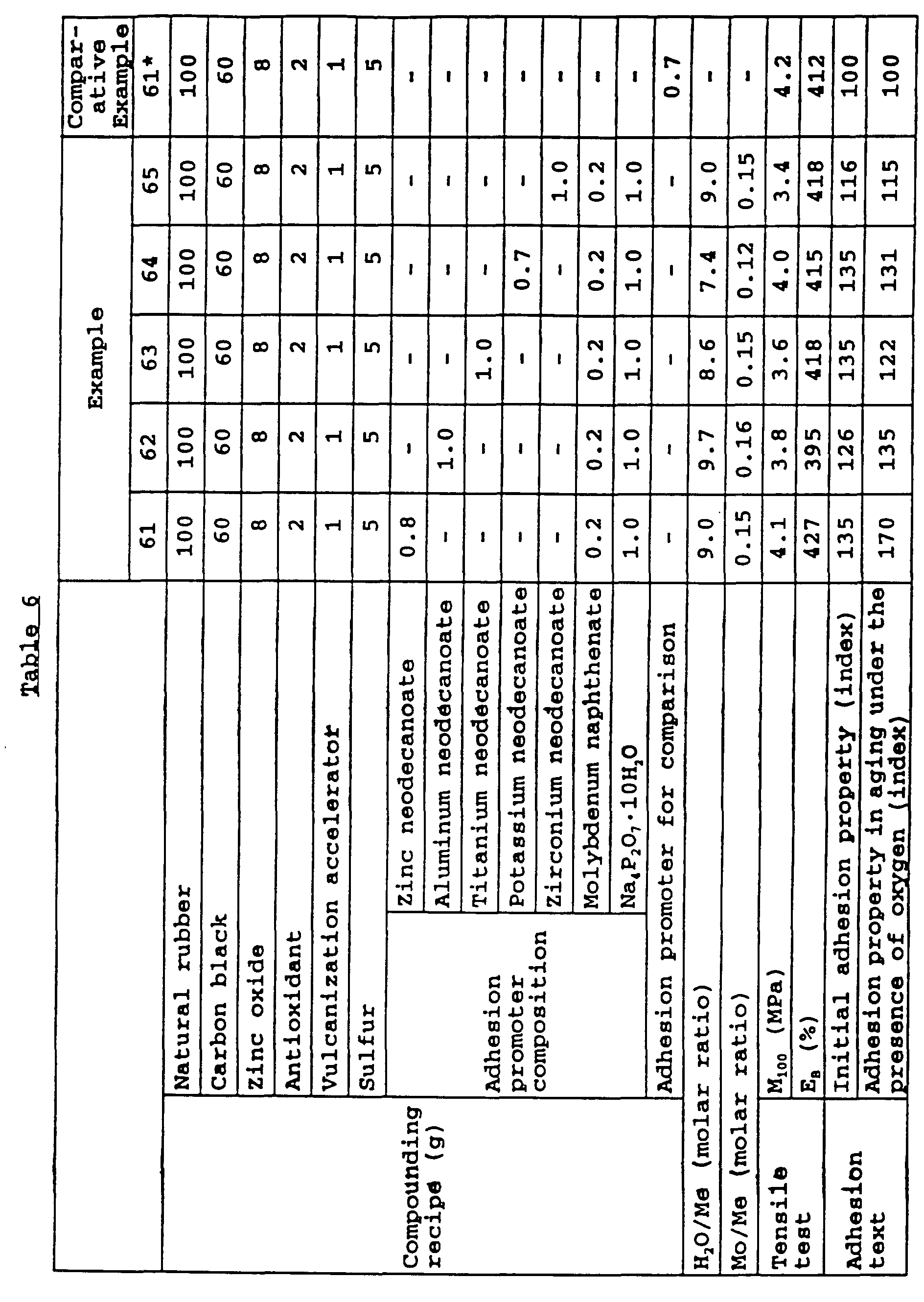

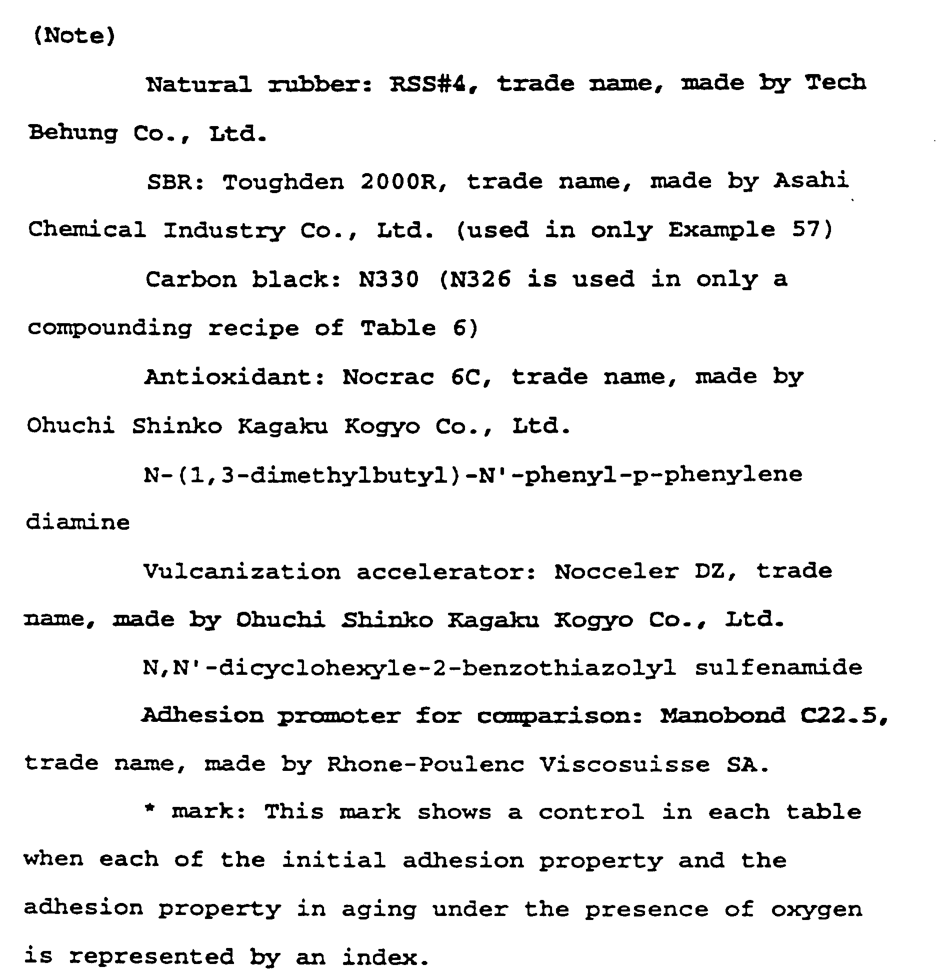

Furthermore, a ratio of an effective component (metal) in the metal salt of organic acid or the organic molybdenum compound used in each table is shown in Table 7. In this case, ○ mark corresponds to Example 28 and ⓞmark Example 29, respectively.

**Table 7**

| Compound | Effective component (% by weight) |
|---|---|
| Zinc neodecanoate | 20.4 |
| Molybdenum naphthenate | 18.2 |
| Zinc naphthenate | 17.6 |
| Zinc rosinate | 8.9 |
| Zinc salt of tall oil acid | 12.3 |
| Aluminum neodecanoate | 6.3 |
| Titanium neodecanoate | 12.5 |
| Potassium neodecanoate | 17.0 |
| Zirconium neodecanoate | 22.7 |
| Cobalt neodecanoate | 14.2 |
| Molybdenum neodecanoate | 25.9 |
| Mo-DTP | 19.1 |
| ○ Zinc neodecanoate/ Molybdenum naphthenoate | (Zn) 12.3 (Mo)4.3 |
| ⓞ Zinc neodecanoate/Mo-DTP | (Zn)13.4 (Mo)4.92 |

As seen from Table 1, when the metal salt of organic acid and the hydrous inorganic salt are included, both the initial adhesion property and the adhesion property in aging under the presence of oxygen are improved. Also, the effect is observed even when the kind of the hydrous inorganic salt is varied.

As seen from Table 2, when the metal salt of organic acid and the organic molybdenum compound are included, the initial adhesion property and the adhesion property in aging under the presence of oxygen, particularly the latter property, are improved. Moreover, the effect is observed irrespective of the kind of the organic molybdenum compound.

As seen from Table 3, when the metal salt of organic acid, the hydrous inorganic salt and the organic molybdenum compound are included, both the initial adhesion property and the adhesion property in aging under the presence of oxygen are effectively improved. The effect is observed irrespective of the molar ratio of H₂O/Me and the molar ratio of Mo/Me.

As seen from Table 4, a considerable effect is obtained when the metal salt of organic acid, the hydrous inorganic salt and the organic molybdenum compound are included.

As seen from Table 5, the effect is observed irrespective of the kind of the organic acid constituting the metal salt of organic acid and of the organic molybdenum compound.

As seen from Table 6, the effect is observed irrespective of the kind of the metal constituting the metal salt of organic acid.

As seen from the above, each of the Examples has a stable adhesion property at a high level without degradation of rubber properties.

The metal salts of organic acid except for cobalt have not been put into practical use because the adhesive force just after vulcanization is poor. According to the invention, however, when a specified metal salt of organic acid other than cobalt is used, in combination with a hydrous inorganic salt or an organic molybdenum compound, there can be provided an adhesion promoter composition which is satisfactory in respect of not only safety and economy but also adhesive force, as well as an adherent rubber composition containing the same.

Furthermore, a higher initial adhesive force is obtained by adding both the hydrous inorganic salt and the organic molybdenum compound to the specified metal salt of organic acid according to the invention, and can be stably maintained.

Therefore, the invention can particularly be applied in adhesion promotion between steel cord subjected to brass plating and coating rubber for the steel cord.

## Claims

1. An adhesion promoter composition **characterized by** including a metal salt of an organic acid containing at least one metal selected from the group consisting of Zn, K, Al, Ti and Zr, and a hydrous inorganic salt.

2. An adhesion promoter composition according to claim 1, wherein an organic molybdenum compound is included instead of the hydrous inorganic salt among the components of the adhesion promoter composition.

3. An adhesion promoter composition according to claim 1, wherein an organic molybdenum compound is further included in addition to the components of the adhesion promoter composition.

4. An adhesion promoter composition according to claim 1 or 3, wherein a molar ratio (H₂O/Me) of water (H₂O) in the hydrous inorganic salt to metal (Me) in the metal salt of the organic acid is 0.1-100.

5. An adhesion promoter composition according to claim 2 or 3, wherein a molar ratio (Mo/Me) of molybdenum (Mo) in the organic molybdenum compound to metal (Me) in the metal salt of the organic acid is 0.01-100.

6. An adhesion promoter composition according to claim 3, wherein a molar ratio (H₂O/Me) of water (H₂O) in the hydrous inorganic salt to metal (Me) in the metal salt of the organic acid is 0.1-100, and a molar ratio (Mo/Me) of molybdenum (Mo) in the organic molybdenum compound to metal (Me) in the metal salt of the organic acid is 0.01-100, and a molar ratio (H₂O/Mo) of water (H₂O) in the hydrous inorganic salt to molybdenum (Mo) in the organic molybdenum compound is 1-500.

7. An adherent rubber composition **characterized by** compounding a) at least one rubber ingredient selected from the group consisting of natural rubber and synthetic rubbers, b) an adhesion promoter composition described in any one of claims 1-6, and c) sulfur.

8. An adherent rubber composition according to claim 7, wherein the adhesion promoter composition described in claim 1 or 4 is compounded in an amount of 2.0 × 10⁻⁴ - 2.0 × 10⁻² mole calculated in terms of metal in the metal salt of the organic acid and in an amount of 2.5 × 10⁻³ - 2.5 × 10⁻¹ mole calculated in terms of water in the hydrous inorganic salt, and sulfur is compounded in an amount of 3-8 g, based on 100 g of the rubber ingredient.

9. An adherent rubber composition according to claim 7, wherein the adhesion promoter composition described in claim 2 or 5 is compounded in an amount of 2.0 X 10⁻⁴ - 2.0 × 10⁻² mole calculated in terms of metal in the metal salt of the organic acid and in an amount of 2.0 × 10⁻⁶ - 2.0 × 10 mole calculated in terms of molybdenum in the organic molybdenum compound, and sulfur is compounded in an amount of 3-8 g, based on 100 g of the rubber ingredient.

10. An adherent rubber composition according to claim 7, wherein the adhesion promoter composition described in claim 3 or 6 is compounded in an amount of 2.0 × 10⁻⁴ - 2.0 × 10⁻² mole calculated in terms of metal in the metal salt of the organic acid and in an amount of 2.5 × 10⁻³ - 2.5 × 10⁻¹ mole calculated in terms of water in the hydrous inorganic salt and in an amount of 2.0 × 10⁻⁶ - 2.0 × 10 mole calculated in terms of molybdenum in the organic molybdenum compound, and sulfur is compounded in an amount of 3-8 g, based on 100 g of the rubber ingredient.

## Patentansprüche

1. Haftvermittler-Zusammensetzung, **dadurch gekennzeichnet, daß** sie ein Metallsalz einer organischen Säure, das mindestens ein Metall enthält, ausgewählt aus der Gruppe, die aus Zn, K, Al, Ti und Zr besteht, sowie ein wasserhaltiges anorganisches Salz aufweist.

2. Haftvermittler-Zusammensetzung nach Anspruch 1, in der statt des wasserhaltigen anorganischen Salzes eine organische Molybdänverbindung unter den Komponenten der Haftvermittler-Zusammensetzung enthalten ist.

3. Haftvermittler-Zusammensetzung nach Anspruch 1, in der zusätzlich zu den Komponenten der Haftvermittler-Zusammensetzung außerdem eine organische Molybdänverbindung enthalten ist.

4. Haftvermittler-Zusammensetzung nach Anspruch 1 oder 3, wobei ein Molverhältnis (H₂O/Me) von Wasser (H₂O) in dem wasserhaltigen anorganischen Salz zu Metall (Me) in dem Metallsalz der organischen Säure 0,1 - 100 beträgt.

5. Haftvermittler-Zusammensetzung nach Anspruch 2 oder 3, wobei ein Molverhältnis (Mo/Me) von Molybdän (Mo) in der organischen Molybdänverbindung zu Metall (Me) in dem Metallsalz der organischen Säure 0,01 - 100 beträgt.

6. Haftvermittler-Zusammensetzung nach Anspruch 3, wobei ein Molverhältnis (H₂O/Me) von Wasser (H₂O) in dem wasserhaltigen anorganischen Salz zu Metall (Me) in dem Metallsalz der organischen Säure 0,1 - 100 beträgt und ein Molverhältnis (Mo/Me) von Molybdän (Mo) in der organischen Molybdänverbindung zu Metall (Me) in dem Metallsalz der organischen Säure 0,01 - 100 beträgt und ein Molverhältnis (H₂O/Mo) von Wasser (H₂O) in dem wasserhaltigen anorganischen Salz zu Molybdän (Mo) in der organischen Molybdänverbindung 1 - 500 beträgt.

7. Haftfähige Kautschukzusammensetzung, **gekennzeichnet durch** Vermischen a) mindestens eines Kautschukbestandteils, ausgewählt aus der Gruppe, die aus Naturkautschuk und synthetischen Kautschuken besteht, b) einer in einem der Ansprüche 1 - 6 beschriebenen Haftvermittler-Zusammensetzung und c) Schwefel.

8. Haftfähige Kautschukzusammensetzung nach Anspruch 7, wobei die in Anspruch 1 oder 4 beschriebene Haftvermittler-Zusammensetzung in einem Anteil von 2,0 × 10⁻⁴ - 2,0 × 10⁻² Mol, bezogen auf das Metall in dem Metallsalz der organischen Säure, und in einem Anteil von 2,5 × 10⁻³ - 2,5 × 10⁻¹ Mol, bezogen auf den Wasseranteil in dem wasserhaltigen anorganischen Salz, beigemischt wird, und wobei Schwefel in einem Anteil von 3 - 8 g pro 100 g des Kautschukbestandteils beigemischt wird.

9. Haftfähige Kautschukzusammensetzung nach Anspruch 7, wobei die in Anspruch 2 oder 5 beschriebene Haftvermittler-Zusammensetzung in einem Anteil von 2,0 × 10⁻⁴ - 2,0 × 10⁻² Mol, bezogen auf das Metall in dem Metallsalz der organischen Säure, und in einem Anteil von 2,0 x 10⁻⁶ - 2,0 x 10 Mol, bezogen auf den Molybdänanteil in der organischen Molybdänverbindung, beigemischt wird, und wobei Schwefel in einem Anteil von 3 - 8 g pro 100 g des Kautschukbestandteils beigemischt wird.

10. Haftfähige Kautschukzusammensetzung nach Anspruch 7, wobei die in Anspruch 3 oder 6 beschriebene Haftvermittler-Zusammensetzung in einem Anteil von 2,0 × 10⁻⁴ - 2,0 × 10⁻² Mol, bezogen auf das Metall in dem Metallsalz der organischen Säure, und in einem Anteil von 2,5 x 10⁻³ - 2,5 × 10⁻¹ Mol, bezogen auf den Wasseranteil in dem wasserhaltigen anorganischen Salz, und in einem Anteil von 2,0 × 10⁻⁶ - 2,0 x 10 Mol, bezogen auf den Molybdänanteil in der organischen Molybdänverbindung, beigemischt wird, und wobei Schwefel in einem Anteil von 3 - 8 g pro 100 g des Kautschukbestandteils beigemischt wird.

## Revendications

1. Composition de promoteur d'adhésion **caractérisée en ce qu'**elle comprend un sel métallique d'un acide organique contenant au moins un métal choisi dans le groupe constitué de Zn, K, Al, Ti et Zr, et un sel inorganique hydraté.

2. Composition de promoteur d'adhésion selon la revendication 1, dans laquelle un composé de molybdène organique est compris à la place du sel inorganique hydraté parmi les composants de la composition de promoteur d'adhésion.

3. Composition de promoteur d'adhésion selon la revendication 1, dans laquelle un composé de molybdène organique est en outre compris en plus des composants de la composition de promoteur d'adhésion.

4. Composition de promoteur d'adhésion selon la revendication 1 ou 3, dans laquelle un rapport molaire (H₂O/Me) de l'eau (H₂O) dans le sel inorganique hydraté au métal (Me) dans le sel métallique de l'acide organique est de 0,1-100.

5. Composition de promoteur d'adhésion selon la revendication 2 ou 3, dans laquelle un rapport molaire (Mo/Me) du molybdène (Mo) dans le composé de molybdène organique au métal (Me) dans le sel métallique de l'acide organique est de 0,01-100.

6. Composition de promoteur d'adhésion selon la revendication 3, dans laquelle un rapport molaire (H₂O/Me) de l'eau (H₂O) dans le sel inorganique hydraté au métal (Me) dans le sel métallique de l'acide organique est de 0,1-100, et un rapport molaire (Mo/Me) du molybdène (Mo) dans le composé de molybdène organique au métal (Me) dans le sel métallique de l'acide organique est de 0,01-100, et un rapport molaire (H₂O/Mo) de l'eau (H₂O) dans le sel inorganique hydraté au molybdène (Mo) dans le composé de molybdène organique est de 1-500.

7. Composition de caoutchouc adhérent **caractérisée par** le mélange de a) au moins un ingrédient de type caoutchouc choisi dans le groupe constitué du caoutchouc naturel et des caoutchoucs synthétiques, b) une composition de promoteur d'adhésion selon l'une quelconque des revendications 1 à 6, et c) du soufre.

8. Composition de caoutchouc adhérent selon la revendication 7, dans laquelle la composition de promoteur d'adhésion selon la revendication 1 ou 4 est mélangée en une quantité de 2,0x10⁻⁴ - 2,0x10⁻² mole calculée en termes du métal dans le sel métallique de l'acide organique et en une quantité de 2,5x10⁻³ - 2,5x10⁻¹ mole calculée en termes de l'eau dans le sel inorganique hydraté, et le soufre est mélangé en une quantité de 3 à 8 g, pour 100 g de l'ingrédient de type caoutchouc.

9. Composition de caoutchouc adhérent selon la revendication 7, dans laquelle la composition de promoteur d'adhésion selon la revendication 2 ou 5 est mélangée en une quantité de 2,0x10⁻⁴ - 2,0x10⁻² mole calculée en termes du métal dans le sel métallique de l'acide organique et en une quantité de 2,0x10⁻⁶ - 2,0x10 mole calculée en termes du molybdène dans le composé de molybdène organique, et le soufre est mélangé en une quantité de 3 à 8 g, pour 100 g de l'ingrédient de type caoutchouc.

10. Composition de caoutchouc adhérent selon la revendication 7, dans laquelle la composition de promoteur d'adhésion selon la revendication 3 ou 6 est mélangée en une quantité de 2,0x10⁻⁴ - 2,0x10⁻² mole calculée en termes du métal dans le sel métallique de l'acide organique et en une quantité de 2,5x10⁻³ - 2,5x10⁻¹ mole calculée en termes de l'eau dans le sel inorganique hydraté et en une quantité de 2,0x10⁻⁶ - 2,0x10 mole calculée en termes du molybdène dans le composé de molybdène organique, et le soufre est mélangé en une quantité de 3 à 8 g, pour 100 g de l'ingrédient de type caoutchouc.
